# EUROPÄISCHE PATENTSCHRIFT

(11) **EP 2 515 101 B1**
(45) Veröffentlichungstag und Bekanntmachung des Hinweises auf die Patenterteilung: **03.05.2023**
(21) Anmeldenummer: 12177070.5
(22) Anmeldetag: 10.02.2005
(51) Int. Cl.: G01N 21/95

(54) **Verfahren zur Planung einer Inspektionsbahn und zur Bestimmung von zu inspizierenden Bereichen**
Methods for planning an inspection path and determining the sections to be inspected
Procédure de planification d'une voie d'inspection et de détection des zones à inspecter

(30) Priorität: 18.02.2004 DE 102004007829
(43) Veröffentlichungstag der Anmeldung: 24.10.2012
(62) Teilanmeldung aus: 05701392.2
(73) Patentinhaber: Isra Vision Systems AG, 64297 Darmstadt (DE)
(72) Erfinder: Ersü, Enis, 64297 Darmstadt (DE); Wienand, Stephan, 64673 Zwingenberg (DE)
(74) Vertreter: Keil & Schaafhausen Patentanwälte PartGmbB

(56) Entgegenhaltungen:
- WO-A-00/63681
- DE-A1- 19 739 250
- US-A- 6 064 759
- US-A1- 2002 169 586

## Beschreibung

Die vorliegende Erfindung betrifft ein Verfahren zur Bestimmung von zu inspizierenden Bereichen einer Oberfläche auf einem dreidimensionalen Objekt aus in elektronischer Form vorliegenden Konstruktionsdaten, insbesondere CAD-Daten, des Objekts gemäß Anspruch 1. Dies kann mit einem Verfahren zur Planung einer Inspektionsbahn für mindestens eine optische Aufnahmeeinrichtung, insbesondere eine Kamera, zur Inspektion des dreidimensionalen Objekts mit den Merkmalen des Anspruchs 8 kombiniert werden, bei dem die Aufnahmeeinrichtung und das Objekt mittels einer Bewegungseinrichtung relativ zueinander bewegbar sind.

Es gibt Verfahren zur Untersuchung von Oberflächen mit Kameras, bei denen eine Kamera relativ zu einem zu untersuchenden Objekt bewegt und dabei die Oberfläche des Objektes optisch abgetastet wird. Bei größeren Objekten ist es notwendig, eine Inspektionsbahn vorzugeben, auf der die optische Aufnahmeeinrichtung bzw. Kamera an dem Objekt entlang gefahren wird. Dazu sind das zu untersuchende Objekt und/oder die optische Aufnahmeeinrichtung auf einer Bewegungseinrichtung, beispielsweise einem Laufband, einem Roboter, einem Manipulator, einem Handhabungsgerät oder dgl., montiert, damit das Objekt und die Aufnahmeeinrichtung relativ zueinander möglichst in allen Freiheitsgraden bewegt werden können. Der Bewegungsablauf dieser Bewegungseinrichtung, d.h. die Inspektionsbahn für die optische Aufnahmeeinrichtung, müssen der Steuerung der Bewegungseinrichtung vorgegeben werden. Dies ist gerade bei komplizierten dreidimensionalen Objekten, beispielsweise Karossen, aufwendig, da viele Einstellungen notwendig sind, um den gesamten Oberflächenbereich des Objektes abzutasten. Die Bewegungsabläufe der Bewegungseinrichtung müssen in der Regel manuell konfiguriert oder zumindest manuell überprüft und ggf. nachkorrigiert werden. Dabei müssen auch die zu inspizierenden Bereiche auf der Oberfläche des Objektes ausgewählt werden. Auch diese Vorgaben erfolgen größtenteils manuell.

Die US 6,064,759 D4 beschreibt ein System zur Ermittlung der Dimensionen von Objekten basierend auf der Form der Oberflächen und Kanten der Objekte. Dazu werden eine Strukturlichtquelle mit einer Machine-Vision-Kamera kombiniert, wobei die Beleuchtungsrichtung und die optische Achse der Kamera in einem definierten Winkel zueinander stehen, so dass die räumlichen Koordinaten von Punkten auf der Oberfläche des Teils mittels Triangulationsverfahren bestimmt werden können. Die Größe des Objekts wird auf Grundlage eines vorliegenden geometrischen Modells des Objekts bestimmt, indem durch eine Simulation ermittelt wird, welche Oberflächen- oder Kantenpunkte für die Inspektion benötigt werden. Die Inspektionseinrichtung errechnet dann (aus dem aufgenommenen Bild) genau für die benötigten Punkte die dreidimensionalen Koordinaten und bestimmt daraus Dimensionen des Objekts, nämlich aus den mittels Simulation festgelegten Punkten, wobei das der Simulation zugrunde gelegte geometrische Modell des Objekts auf grundlegende geometrische Körper reduziert sein kann. Aufgrund der Simulation kann die räumliche Auflösung entsprechend vorgegeben und ein Optimum zwischen Inspektionsgeschwindigkeit und hoher Auflösung erreicht werden.

Aus WO 2000/63681 A1 ist ein Verfahren bekannt, zur Bestimmung geeigneter Sensorpositionen und Orientierungen, um ein Objekt zu inspizieren oder zu vermessen. Dabei wird durch, aus einem CAD-Modell gewonnenen, Daten eines Prüfobjekts ein Prüfplan erstellt, der einzelne Sensorpositionen und die dazugehörigen Blickwinkel beschreibt.

US 2002/169586 A1 behandelt ebenfalls die Festlegung geeigneter Sensorpositionen und -orientierungen bei der Inspektion von hergestellten Bauteilen. Dabei werden aus einem CAD-Modell und einem Sensormodell mit Hilfe eines Sensorplaners Sensorpositionen und -orientierungen bestimmt. Bei einer selektiven Bauteilinspektion werden lediglich bestimmte Bereiche, Kurven oder Punkte eines Bauteils inspiziert, die durch Marker festgelegt sind. Diese Marker müssen entweder in den CAD Daten vorhanden sein oder manuell von einem Benutzer gesetzt werden.

Die DE 197 39 250 A1 offenbart ein Verfahren und eine Anordnung zum optischen Erfassen von Freiformflächen. Auch diese Druckschrift beschreibt die genaue Positionierung der Aufnahmeeinrichtung und auch die genaue Positionierung einer zugehörigen Beleuchtungseinrichtung, um ein Bild in einer vorgegebenen Eignung für eine Aufnahmesituation zu erfassen. Dabei können für einzelne Bereiche des Bauteils eine individuelle Aufzeichnung erfolgen und diese dann im Rechner zusammengefügt werden, um ein vollumfängliches Bild der gesamten Oberfläche zu erhalten.

Aufgabe der vorliegenden Erfindung ist es daher, Verfahren zur Planung von Inspektionsbahnen und zur Bestimmung von zu inspizierenden Bereichen anzugeben, die einfacher zu handhaben und zuverlässig alle zu inspizierenden Bereiche abdecken.

Diese Aufgabe wird gelöst durch ein Verfahren zur Bestimmung von zu inspizierenden Bereichen nach Anspruch 1 und ein Verfahren zur Planung einer Inspektionsbahn nach Anspruch 8, das mit dem Verfahren gemäß Anspruch 1 kombinert ist.

Bei dem Verfahren zur Planung einer Inspektionsbahn werden die zu inspizierenden Bereiche wie nachstehend beschrieben bestimmt und aus den Konstruktionsdaten, insbesondere CAD-Daten und aus Sensordaten erzeugten Daten, des Objekts und/oder eines zu inspizierenden Bereichs auf dem Objekt und den optischen Abbildungseigenschaften der Aufnahmeeinrichtung, welche in elektronischer Form abgespeichert sind, die Inspektionsbahn für die optische Aufnahmeeinrichtung mittels einer Recheneinheit selbsttätig ermittelt, indem eine bestimmte geometrische Relation zwischen der Aufnahmeeinrichtung und der zu inspizierenden Oberfläche vorgegeben wird. Dann ist es möglich, die erforderliche Bahn für die Aufnahmeeinrichtung aus den Konstruktionsdaten und den Abbildungseigenschaften der optischen Aufnahmeeinrichtung automatisch zu berechnen, ohne dass diese aufwendig manuell berechnet oder bestimmt werden muss. Durch Vorgabe bestimmter Aufnahmebedingungen, die insbesondere durch bestimmte geometrische Relationen zwischen der Aufnahmeeinrichtung und der zu inspizierenden Oberfläche definiert werden, ist es möglich, sämtliche Positionen für die Aufnahmeeinrichtung zu bestimmen, um das gesamte Objekt oder die zu inspizierenden Bereiche des Objektes während der optischen Inspektion vollständig abzudecken.

Die genaue Form des zu inspizierenden Objektes ist dabei durch in elektronischer gespeicherter Form vorliegenden Konstruktionsdaten des Objektes in beliebiger Genauigkeit bekannt. Aus diesen Informationen kann also eine Inspektionsbahn automatisch bestimmt werden, ohne dass der Bewegungsablauf manuell vorgegeben werden muss. Es ist insbesondere auch möglich, die relevanten Konstruktionsdaten aus Sensordaten, bspw. durch Aufnahme und Auswertung von Bildern, Abtastung oder dgl. zu erzeugen. In diesem Fall ist ein selbsttätiges Erlernen der notwendigen Konstruktionsdaten des Objekts möglich, so dass diese nicht von gesondert vorgegeben werden müssen. Die Abspeicherung der Daten erfolgt dann automatisch. Die Ermittlung der Konstruktionsdaten aus Sensordaten kann auch dazu verwendet werden, bereits vorhandene Konstruktionsdaten in ihrer Genauigkeit zu verbessern bzw. deren Auflösung zu verfeinern.

Dabei kann die Inspektionsbahn so geplant werden, dass die optische Aufnahmeeinrichtung über das stehende oder bewegte Objekt geführt wird, wobei vorzugsweise die Bewegungsmöglichkeiten der Bewegungseinrichtung berücksichtigt werden. Besonders vorteilhaft kann die Bewegungseinrichtung als Manipulator, Handhabungsgerät oder mehrachsige Verfahreinheit ausgebildet sein, die insbesondere eine Bewegung in mehreren Freiheitsgraden, beispielsweise um mehrere verschiedene Drehachsen, zulässt.

Bei der Planung der Inspektionsbahn werden vorzugsweise Aufnahmepositionen der Aufnahmeeinrichtung derart bestimmt, dass das gesamte dreidimensionale Objekt oder alle zu inspizierenden Bereiche auf dem Objekt durch aufgenommene Bilder abgedeckt werden. Dazu wird überprüft, ob die aus den Konstruktionsdaten ermittelten Oberflächen des Objektes, die inspiziert werden sollen, vollständig durch die während der Inspektion aufgenommenen Bilder abgedeckt werden. Dies kann anhand der bekannten optischen Abbildungseigenschaften der Aufnahmeeinrichtung und den durch die Inspektionsbahn bestimmten Positionen der optischen Aufnahmeeinrichtung festgestellt werden.

In einer besonders vorteilhaften Ausgestaltung dieser Verfahrensvariante werden aus den Bewegungsinformationen der Bewegungseinrichtung und den ermittelten Aufnahmepositionen der Aufnahmeeinrichtung Zeitpunkte für die Aufnahme der Bilder bestimmt. Durch die Berücksichtigung der tatsächlichen Bewegungsinformationen der Bewegungseinrichtung und der Aufnahmepositionen während des Abfahrens der Inspektionsbahn können diese Informationen dann direkt bei dem optischen Abtasten verwendet werden, um die Aufnahme von Bildern insbesondere abhängig von Auflösung, Position und/oder Zeit zu steuern bzw. auszulösen.

Erfindungsgemäß kann der Aufnahmeeinrichtung eine Beleuchtungseinrichtung zugeordnet und die Inspektionsbahn ermittelt werden, indem eine bestimmte geometrische Relation zwischen der Aufnahmeeinrichtung, der Beleuchtungseinrichtung und der zu inspizierenden Oberfläche vorgegeben wird. Dadurch wird die Inspektionsbahn auch unter Berücksichtigung der Beleuchtungssituation ermittelt. Für den Fall, dass die Beleuchtungseinrichtung und die Aufnahmeeinrichtung zu einer Inspektionseinheit zusammengefasst sind, wird die Inspektionsbahn für die Inspektionseinheit bestimmt. Es ist jedoch auch möglich, dass die Aufnahmeeinrichtung und die Beleuchtungseinrichtung mit separaten Bewegungseinrichtungen versehen sind, die unabhängig voneinander bewegt werden können. In diesem Fall wird die Inspektionsbahn so festgelegt, dass sowohl für die Aufnahmeeinrichtung als auch für die Beleuchtungseinrichtung je eine separate Inspektionsbahn vorgegeben wird, wobei beide Inspektionsbahnen zeitlich aufeinander abgestimmt sind. Entsprechendes gilt für den Fall, dass mehrere Aufnahmeeinrichtungen, Beleuchtungseinrichtungen und/oder Inspektionseinheiten vorgesehen sind.

Die Planung der Inspektionsbahn kann die Planung der Bewegungsabläufe sämtlicher Bewegungseinrichtungen sowie ggf. des Objektes selbst beinhalten, wenn auch dieses bewegbar ist. Dazu wird in einer besonders bevorzugten Variante der vorliegenden Erfindung aus der Inspektionsbahn ein Bewegungsablauf für die Relativbewegung zwischen Objekt und Aufnahmeeinrichtung und/oder Beleuchtungseinrichtung ermittelt.

Bei der Ermittlung des Bewegungsablaufs wird vorzugsweise berücksichtigt, dass die Inspektionszeit möglichst kurz und/oder der Inspektionsweg möglichst klein gehalten wird, um den Bewegungsablauf während der Inspektion zu optimieren.

Da das Bild der optischen Aufnahmeeinrichtung je nach den optischen Aufnahmeeigenschaften, beispielsweise der Kamerabrennweite, einen wesentlich größeren Bildausschnitt als den zu inspizierenden Bereich der Oberfläche aufweisen kann, kann jedem Bild der optischen Aufnahmeeinrichtung gemäß der vorliegenden Erfindung ein Inspektionsbereich innerhalb des Bildes zugeordnet werden, der während der Inspektion dann von einer Bildverarbeitungssoftware ausgewertet wird.

Dazu kann insbesondere vorgesehen sein, dass anhand des Inspektionsbereichs und der Inspektionsbahn überprüft wird, ob das durch die Konstruktionsdaten definierte Objekt oder der zu inspizierende Bereich auf dem Objekt vollständig abgedeckt wird. Dies kann beispielsweise durch eine rechnergestützte Simulation des Inspektionsverlaufs anhand der ausgerechneten Inspektionsbahnen erfolgen, wobei die in den Bildern definierten Inspektionsbereiche auf dem anhand der Konstruktionsdaten definierten Objekt markiert werden, um zu überprüfen, ob tatsächlich sämtliche zu inspizierende Bereiche abgedeckt sind.

Um eine zusätzliche manuelle Kontrolle zu ermöglichen, kann vorgesehen werden, dass die Inspektionsbahn und/oder die auf dem Objekt definierten zu inspizierenden Bereiche auf einem Anzeigemittel, insbesondere einem Bildschirm, visualisiert werden.

Das erfindungsgemäße Verfahren zur Bestimmung von zu inspizierenden Bereichen einer Oberfläche auf einem dreidimensionalen Objekt aus in elektronischer Form vorliegenden Konstruktionsdaten, insbesondere CAD-Daten des Objekts, gemäß Anspruch 1 kann in vorteilhafter Weise mit dem zuvor beschriebenen Verfahren kombiniert werden kann. Erfindungsgemäß wird dabei für bestimmte Bereiche auf dem Objekt vorgegeben, ob und auf welche Weise diese Bereiche inspiziert werden sollen, wobei dann während der Inspektion mit einer Aufnahmeeinrichtung eine Zuordnung dieser zu inspizierenden Bereiche zu den tatsächlich aufgenommenen Bildern erfolgt. Dadurch wird während der Inspektion überprüft, ob tatsächlich alle zu inspizierenden Bereiche erfasst wurden. Diese Kontrolle während der Inspektion lässt sich sowohl bei einer automatischen als auch bei einer manuellen Bahnplanung anwenden und stellt sicher, dass tatsächlich das gesamte Objekt erfasst wurde.

Es ist vorgesehen, dass nicht zu inspizierende Bereiche und/oder auf eine bestimmte Art zu inspizierende Bereiche durch aus den Konstruktionsdaten des Objektes bestimmbare Parameter, insbesondere geometrische Formen oder Relationen, automatisch ermittelt werden. Auf diese Weise können auch sämtliche zu inspizierenden Bereiche des Objektes automatisch anhand der Konstruktionsdaten ermittelt werden. Dagegen werden die Bereiche, bei denen eine sinnvolle Inspektion beispielsweise aufgrund ihrer geometrischen Ausformung nicht möglich ist, automatisch unterdrückt, ohne dass diese Bereiche manuell ausgewählt oder gekennzeichnet werden müssen. Dadurch reduziert sich der manuelle Aufwand für die Auswahl der zu inspizierenden Bereiche erheblich.

Vorzugsweise können die zu inspizierenden Bereiche als berechnete bzw. künstliche Bilder abgespeichert werden, die anhand der Konstruktionsdaten des Objektes erzeugbar sind. Diese künstlichen Bilder können dann mit den tatsächlich aufgenommenen Bildern während der Inspektion verglichen werden. Zusätzlich ist es möglich, diese berechneten Bilder zu visualisieren, um eine optische Überprüfungsmöglichkeit zu bieten.

In einer besonderen Ausgestaltung dieses erfindungsgemäßen Verfahrens sind die automatisch generierten, zu inspizierenden Bereiche manuell nachbearbeitbar, um Korrekturen an den automatisch generierten Inspektionsbereichen vornehmen zu können.

Zur Kontrolle kann ferner vorgesehen werden, dass die künstlichen Bilder mit den zu inspizierenden Bereichen und/oder eine Visualisierung der zu inspizierende Bereiche in die tatsächlich aufgenommenen Bilder eingeblendet werden.

Um während der Inspektion eine genauere Zuordnung von den zu inspizierenden Bereichen zu den tatsächlichen Bildern zu erreichen, werden aus den Konstruktionsdaten ermittelte Merkmale in den zu inspizierenden Bereichen erfindungsgemäß mit in den aufgenommenen Bildern erkennbaren Merkmalen verglichen. Aufgrund dieses Vergleichs kann, sofern eine Abweichung in der Lage der Merkmale auftritt, ggf. eine Lagekorrektur durchgeführt werden, indem die Merkmale in den zu inspizierenden Bereichen und den Bildern übereinander geschoben werden. Durch diesen Abgleich wird die Zuordnung der zu inspizierenden Bereiche zu den tatsächlichen Bildern für den weiteren Inspektionsverlauf erleichtert. Bei der Suche nach Merkmalen können neben dem aktuellen Bild auch bereits aufgenommene Bilder herangezogen werden.

Gemäß besonders bevorzugten Ausführungsformen der beiden vorbeschriebenen Verfahren werden auch die optischen Aufnahmeeinrichtungen dreidimensional kalibriert. Auf diese Weise ist es möglich, die Lage des aufgenommenen Objekts aus den Bildern selbst sehr genau zu ermitteln. Dies ermöglicht eine Feinpositionierung anhand von in den Bildern erkennbaren Merkmalen, die mit den Merkmalen aus den Konstruktionsdaten verglichen werden können. Auf diese Weise kann also durch Vergleich der dreidimensional kalibrierten Daten mit den Konstruktionsdaten eine Feinpositionierung des Objektes durchgeführt werden. Diese Art der Feinpositionierung ist besonders vorteilhaft, weil dadurch sichergestellt wird, dass die zu inspizierenden Bereiche korrekt in die realen Bilder projiziert werden. Diese Gewissheit besteht nicht, wenn beispielsweise nur die Position des zu inspizierenden Objekts durch Sensoren genau erfasst wird, da weitere Fehlerquellen, wie beispielsweise ein Verrutschen des Objektes auf der Bewegungseinrichtung, nicht zuverlässig erfasst werden.

Besonders vorteilhaft ist es, wenn die Aufnahmeeinrichtung und die Bewegungseinrichtung aufeinander kalibriert sind. Dann sind ihre Koordinaten relativ zueinander in einem Koordinatensystem bekannt, so dass ihre relativen Positionen jederzeit einfach und genau bestimmbar sind.

Weitere Merkmale, Vorteile und Anwendungsmöglichkeiten der erfindungsgemäßen Verfahren werden nachfolgend anhand von Ausführungsbeispielen mit Bezug auf die Zeichnung näher erläutert.

Es zeigen:
- Fig. 1: schematisch den Verfahrensablauf zur Planung einer Inspektionsbahn;
- Fig. 2: schematisch den Verfahrensablauf zur Bestimmung von zu inspizierenden Bereichen einer Oberfläche und
- Fig. 3: schematisch ein Bild mit zu inspizierenden Bereichen auf einem Objekt.

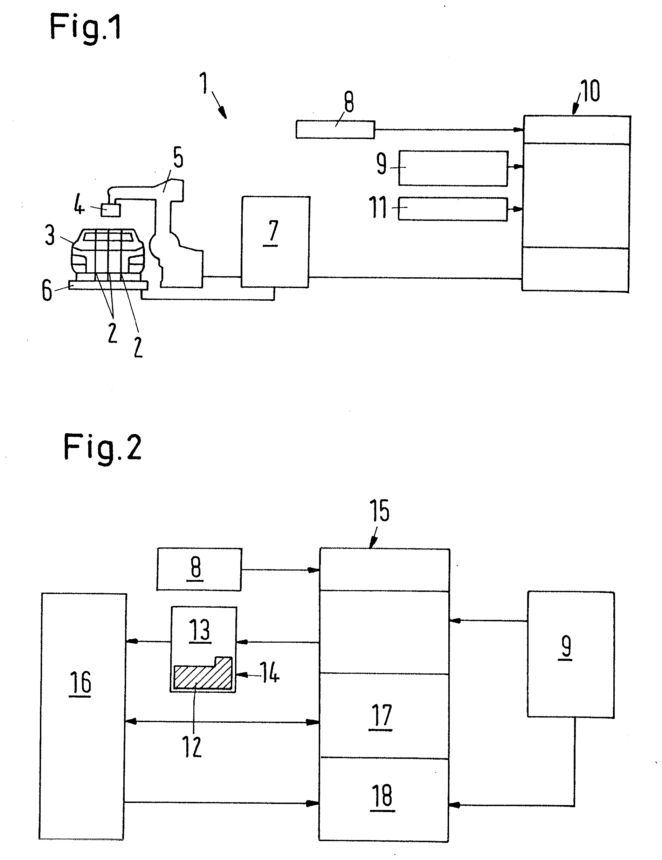

Fig. 1 stellt schematisch ein System 1 zur Oberflächeninspektion dar, bei dem gemäß dem erfindungsgemäßen Verfahren Inspektionsbahnen 2 über ein als Karosse ausgebildetes dreidimensionales Objekt 3 für eine optische Aufnahmeeinrichtung 4 ermittelt werden. Dieses System ist bspw. zur Lackinspektion geeignet. Es ist jedoch nicht auf die Lack- oder Oberflächeninspektion von Karossen beschränkt. Der Vorteil liegt gerade darin, dass dieses System flexibel für die verschiedensten Anwendungen einsetzbar ist und einfach umkonfiguriert werden kann.

Die optische Aufnahmeeinrichtung 4 ist in dem dargestellten Beispiel in eine Inspektionseinheit integriert, in der mindestens eine Kamera als Aufnahmeeinrichtung 4 und mindestens eine Beleuchtungseinrichtung angeordnet sind. Die optische Aufnahmeeinrichtung 4 kann mittels einer als Roboter bzw. Manipulator vorgesehenen Bewegungseinrichtung 5 relativ zu dem dreidimensionalen Objekt 3 bewegt werden, das seinerseits über eine als Förderband ausgebildete Bewegungseinrichtung 6 bewegbar ist. Dadurch kann eine Relativbewegung zwischen der optischen Aufnahmeeinrichtung 4 und dem dreidimensionalen Objekt 3 erreicht werden. Die Bewegungseinrichtungen 5 und 6 werden durch eine gemeinsame Steuereinrichtung 7 angesteuert.

Von dem Objekt 3 und/oder von auf dem Objekt 3 zu inspizierenden Bereichen liegen in elektronischer Form gespeicherte Konstruktionsdaten 8 vor, die insbesondere CAD-Daten eines entsprechenden dreidimensionalen Konstruktionsprogramms sind. Aus diesen Konstruktionsdaten kann der dreidimensionale Aufbau des Objektes 3 abgeleitet werden. Ferner sind die optischen Abbildungseigenschaften der Aufnahmeeinrichtung 4 als Kameraparameter 9 bekannt. Diese Kameraparameter 9 werden vorzugsweise mithilfe einer automatischen Kamerakalibrierung erzeugt, welche sowohl die Abbildungseigenschaften als auch die Position der optischen Aufnahmeeinrichtung 4 bzw. Kamera im Raum umfassen.

Derartige Kalibrierungen können anhand von ortsfest an bekannten Positionen angeordneten Platten mit Mustern, beispielsweise Punkten, automatisch erzeugt werden. Aus den bekannten Positionen und Mustern der Kalibrationsplatten werden dabei sowohl die Abbildungseigenschaften der Kameras 4 als auch deren Position im Raum sehr genau bestimmt. Für den Fall einer ortsfest installierten Kamera, bei der die Relativbewegung zwischen dem dreidimensionalen Objekt 3 und der fest installierten Kamera durch die dem Objekt 3 zugeordnete Bewegungseinrichtung 6 erfolgt, kann die Kalibrationsplatte auf einer eigenen Bewegungseinrichtung angebracht sein. Zur Durchführung der Kalibrierung werden dann die Bewegungseinrichtungen mit der optischen Aufnahmeeinrichtung 4 und/oder der Kalibrationsplatte in eine Kalibrationsposition gefahren, ein Bild aufgenommen und durch eine entsprechende Kalibrationssoftware ausgewertet.

Die Konstruktionsdaten 8 und die Kameraparameter 9 werden durch eine Recheneinheit 10 eingelesen. Mit diesen Daten kann die Recheneinheit 10 gemäß dem erfindungsgemäßen Verfahren die Inspektionsbahn(en) 2 für die optische Aufnahmeeinrichtung 4 selbsttätig ermitteln, indem eine bestimmte geometrische Relation zwischen der Aufnahmeeinrichtung und der zu inspizierenden Oberfläche vorgegeben wird. Durch Vorgabe der geometrischen Relation, beispielsweise des Abstands zwischen der zu inspizierenden Oberfläche und der optischen Aufnahmeeinrichtung 4 und/oder des Winkels zwischen der Oberflächennormalen und der optischen Achse der Aufnahmeeinrichtung 4, kann ein Programm der Recheneinheit 10 anhand der elektronischen Konstruktionsdaten 8 und der Kameraparameter 9 die optimale Inspektionsbahn 2 der optischen Aufnahmeeinrichtung 4 für das Objekt 3 berechnen. Dabei können in den Konstruktionsdaten 8 auch Stützpunkte vorgegeben werden, die durch eine Inspektionsbahn 2 miteinander zu verbinden sind.

Bei einem System mit einer stationären Aufnahmeeinrichtung liegen die möglichen Inspektionsbahnen 2 mit der Ausrichtung der Aufnahmeeinrichtung bereits fest. In diesem Fall beschränkt sich die Planung der Inspektionsbahn 2 auf die Berechnung der Bildspur, die die optische Aufnahmeeinrichtung über die Karosse 3 zieht. Bei beweglichen Aufnahmeeinrichtungen 4 kann dagegen die Position der Aufnahmeeinrichtung flexibel an die Oberflächenform des zu untersuchenden Objekts 3 angepasst werden. Insbesondere bei kleineren optischen Aufnahmeeinrichtungen 4 ist es möglich, die Inspektionsbahn frei auf der Oberfläche des Objektes 3 zu planen, da die optische Aufnahmeeinrichtung 4 mit einer großen Anzahl von Freiheitsgraden über das stehende oder bewegte Objekt 3 geführt werden kann.

Bei der Planung der Inspektionsbahnen 2 werden unter Ausnutzung der bekannten optischen Abbildungseigenschaften der Aufnahmeeinrichtung 4 die jeweiligen Aufnahmepositionen derart bestimmt, dass das gesamte dreidimensionale Objekt 3 oder alle vorher festgelegten zu inspizierenden Bereiche auf dem Objekt 3 durch die aufgenommenen Bilder abgedeckt werden. Dabei kann die gesamte Inspektionsbahn 2 auch aus mehreren, nicht zusammenhängenden Bahnabschnitten bestehen, die durch Zwischenbahnen verbunden werden. Die Zwischenbahnen werden mit einer höheren Geschwindigkeit durchfahren, da auf diesen Zwischenbahnen keine Bildaufnahmen generiert werden.

Aus der Inspektionsbahn 2 für die optische Aufnahmeeinrichtung 4 kann unter Ausnutzung von Bewegungsinformationen 11, die die Bewegungsmöglichkeiten der Bewegungseinrichtungen 5, 6 umfassen, ein Bewegungsablauf für die Relativbewegung zwischen Objekt 3 und Aufnahmeeinrichtung 4 ermittelt werden. Dieser Bewegungsablauf wird von der Recheneinheit 10 an die Steuereinrichtung 7 ausgegeben, die die Bewegungseinrichtungen 5, 6 steuert. Schließlich können unter Berücksichtigung der Bewegungsinformationen 11 der Bewegungseinrichtung 5, 6 und den zuvor bestimmten Aufnahmepositionen der Aufnahmeeinrichtung 4 die richtigen Zeitpunkte für die Aufnahme der Bilder während des Bewegungsablaufs der Bewegungseinrichtungen 5, 6 bestimmt werden.

Damit werden bei der erfindungsgemäßen Planung einer Inspektionsbahn 2 alle Bahnen bestimmt, die die einzelnen Aufnahmeeinrichtungen 4 bzw. Kameras über das Objekt 3, beispielsweise die Karosse, ziehen müssen, damit alle zu inspizierenden Bereiche des Objektes durch Bilder abgedeckt sind. Aus diesen Inspektionsbahnen 2 wird dann der Bewegungsablauf der verschiedenen Bewegungseinrichtungen 5, 6 ermittelt, beispielsweise in Form von zu fahrenden Manipulatorbahnen. Entlang dieser Manipulatorbahnen werden aus den vorher festgelegten Aufnahmepositionen auf der Inspektionsbahn die Zeitpunkte für die Bildaufnahmen der jeweiligen optischen Aufnahmeeinrichtung 4 bestimmt, indem beispielsweise die zu den jeweiligen Zeitpunkten gehörenden Kamerapositionen festgelegt werden. Dieser Bewegungsablauf wird von der Recheneinheit 10 als Steuerungsprogramm der Steuereinrichtung 7 zugeführt, welche dann die Bewegungseinrichtungen 5, 6 automatisch in die richtigen Positionen bewegt.

Zusätzlich zu der automatischen Bahnplanung schlägt die vorliegende Erfindung ein Verfahren zur Bestimmung von zu inspizierenden Bereichen 12 auf einer Oberfläche vor. Häufig gibt es auf den dreidimensionalen Objekten 3, beispielsweise einer Karosse, bestimmte Zonen, die nicht inspiziert werden sollen. Dies können beispielsweise lackierte Flächen sein, die später durch Zier- oder Stoßleisten abgedeckt werden, Scheibenfalze, Biegefalze von Sicken, Seitenflächen von konkaven Einbuchtungen, wie z.B. Nummerschildeinbuchtungen, oder Randbereiche von Blechkanten oder dgl. sein.

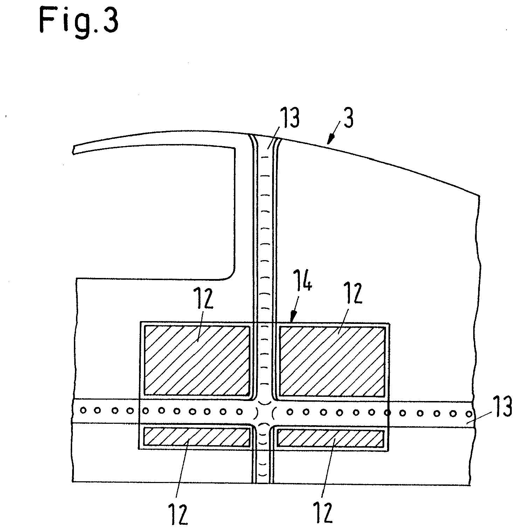

Derartige nicht zu inspizierende Bereiche 13 sind in Fig. 3 dargestellt. Dabei handelt es sich um einen senkrechten Holmen und eine horizontalen Anbringfläche für eine Stoßleiste auf einer Karosse 3. Diese nicht zu inspizierenden Bereiche 13 können aus den Konstruktionsdaten 8 anhand ihrer geometrischen Form und ihrer Erscheinung automatisch ermittelt werden. Diese nicht zu inspizierenden Bereiche 13 werden auf dem Objekt 3 vorgegeben. Gleiches gilt für die zu inspizierenden Bereiche 12, wobei während der Inspektion mit einer Aufnahmeeinrichtung 4 eine Zuordnung dieser zu inspizierenden Bereiche 12 zu den tatsächlich aufgenommenen Bildern erfolgt. Die Zuordnung zu den Bildern kann aufgrund der Konstruktionsdaten 8 und der bekannten Kameraparameter 9 erfolgen, so dass ein Bild 14 einer optischen Aufnahmeeinrichtung 4 sowohl zu inspizierende Bereiche 12 als auch nicht zu inspizierende Bereiche 13 aufweist.

Die Ermittlung dieser Bereiche 12, 13 wird aus den Konstruktionsdaten 8 und den die optischen Abbildungseigenschaften und die Kamerapositionen enthaltenden Kameraparametern 9 der optischen Aufnahmeeinrichtung 4 mit einer Recheneinheit 15 ermittelt. Dabei kann die Recheneinheit 15 mit der Recheneinheit 10 zur Durchführung der automatischen Bahnplanung identisch sein. Die Recheneinheit 15 berechnet alle während der Inspektion aufzunehmenden Kamerabilder und bildet die zu inspizierenden Bereiche 12 darin ab. Komplementär dazu gibt es in den berechneten Bildern 14 nicht zu inspizierende Bereiche 13.

Die automatisch generierten, zu inspizierenden Bereiche 12 in den berechneten Bildern 14 können beispielsweise mit einem grafischen Feineditor 17 nachbearbeitet werden. Mit dem Feineditor 17 können auch verschiedene Inspektionszonen festgelegt werden.

In einem Speicher 16 werden die von der Recheneinheit 15 ggf. unter Nachbearbeitung durch den Feineditor 17 erzeugten Bilder 14 mit den zu inspizierenden Bereichen 12 und/oder den nicht zu inspizierenden Bereichen 13 für jede Aufnahmeeinrichtung 4 abgelegt. Die Nachbearbeitung erfolgt mittels des in der Recheneinheit 15 enthaltenen grafischen Editors 17.

Um zu überprüfen, ob durch die in der Speichereinrichtung 16 für jede Kamera abgelegten, zu inspizierenden Bereiche 12 tatsächlich die gesamte gewünschte Oberfläche abgedeckt wird, gibt es in der Recheneinheit 15 ein Überprüfungsmodul 18, das die Abdeckung des Objekts 3 mit den zu inspizierenden Bereichen 12 überprüft.

Um eine genaue Ausrichtung des Objektes 3 in den tatsächlich aufgenommenen Kamerabildern in Übereinstimmung mit den berechneten Kamerabildern 14, in denen die zu inspizierenden und/oder die nicht zu inspizierenden Bereiche 12, 13 definiert sind, zu erreichen, wird eine Feinpositionierung des Objektes 13 durch Vergleich der dreidimensional kalibrierten aufgenommenen Bilder mit den Konstruktionsdaten 8 durchgeführt. Dadurch wird erreicht, dass die berechneten Bilder 14 und die aufgenommenen Kamerabilder tatsächlich deckungsgleich aufeinanderliegen. Dies kann durch Überprüfung markanter geometrischer Formen in den aus den Konstruktionsdaten 8 berechneten Bildern 14 und den aufgenommenen Bildern erfolgen. Dadurch wird sichergestellt, dass insbesondere die zu inspizierenden Bereiche 12 in den aufgenommenen Bildern richtig definiert und von der nachfolgenden Bildauswertung richtig verarbeitet werden.

Durch die automatische Bahnplanung und Bestimmung von zu inspizierenden Bereichen, die besonders automatisch aus den Konstruktionsdaten erfolgt und während der Durchführung der Inspektion überprüft wird, wird die Oberflächeninspektion mithilfe von optischen Aufnahmesystemen erheblich vereinfacht, da eine manuelle Konfiguration der Inspektionssystem sowie eine manuelle Vorgabe von Inspektionsbahnen weitgehend entfällt.

### Bezugszeichenliste:

- 1: System zur Oberflächeninspektion
- 2: Inspektionsbahn
- 3: dreidimensionales Objekt, Karosse
- 4: optische Aufnahmeeinrichtung
- 5: Bewegungseinrichtung, Manipulator
- 6: Bewegungseinrichtung, Förderband
- 7: Steuereinrichtung
- 8: Konstruktionsdaten
- 9: Kameraparameter, optische Abbildungseigenschaften
- 10: Recheneinheit
- 11: Bewegungsinformationen
- 12: zu inspizierende Bereiche
- 13: nicht zu inspizierende Bereiche
- 14: Bilder
- 15: Recheneinheit
- 16: Speicher
- 17: Feineditor
- 18: Überprüfungsmodul

## Patentansprüche

1. Verfahren zur Bestimmung von zu inspizierenden Bereichen (12) einer Oberfläche auf einem dreidimensionalen Objekt (3) aus in elektronischer Form vorliegenden Konstruktionsdaten (8), insbesondere CAD-Daten, des Objekts (3), wobei für bestimmte Bereiche (12, 13) auf dem Objekt (3) vorgegeben wird, ob und auf welche Weise diese Bereiche (12, 13) inspiziert werden sollen, indem zu inspizierende Bereiche (12), nicht zu inspizierende Bereiche (13) und/oder auf eine bestimmte Art zu inspizierende Bereiche (12) aus den Konstruktionsdaten (8) automatisch ermittelt werden, **dadurch gekennzeichnet, dass** das Ermitteln der zu inspizierenden Bereiche durch Bestimmung geometrischer Formen oder Relationen aus den Konstruktionsdaten erfolgt und dass während der Inspektion mit einer Aufnahmeeinrichtung (4) eine Zuordnung dieser zu inspizierenden Bereiche (12) zu den tatsächlich aufgenommenen Bildern erfolgt, wobei aus den Konstruktionsdaten (8) ermittelte Merkmale in den zu inspizierenden Bereichen (12) mit in den aufgenommenen Bildern erkennbaren Merkmalen verglichen werden.

2. Verfahren nach Anspruch 1, **dadurch gekennzeichnet, dass** die zu inspizierenden Bereiche (12) als berechnete Bilder (14) abgespeichert und/oder visualisiert werden.

3. Verfahren nach Anspruch 2, **dadurch gekennzeichnet, dass** die automatisch generierten, zu inspizierenden Bereiche (12) manuell bearbeitbar sind.

4. Verfahren nach Anspruch 2, **dadurch gekennzeichnet, dass** die berechneten Bilder (14) mit den zu inspizierenden Bereichen (12) und/oder eine Visualisierung der zu inspizierenden Bereiche (12) in die tatsächlich aufgenommenen Bilder eingeblendet werden.

5. Verfahren nach einem der vorhergehenden Ansprüche, **dadurch gekennzeichnet, dass** aufgrund des Vergleichs der in den Konstruktionsdaten (8) ermittelten Merkmale und der in den aufgenommenen erkennbaren Bildern bei einer Abweichung eine Lagekorrektur durchgeführt wird, indem die Merkmale in den zu inspizierenden Bereichen und den Bildern übereinander geschoben werden.

6. Verfahren nach einem der vorhergehenden Ansprüche, **dadurch gekennzeichnet, dass** die optische Aufnahmeeinrichtung (4) dreidimensional kalibriert ist.

7. Verfahren nach Anspruch 6, **dadurch gekennzeichnet, dass** eine Feinpositionierung des Objekts (3) im Bild durchgeführt wird.

8. Verfahren zur Planung einer Inspektionsbahn (2) für mindestens eine optische Aufnahmeeinrichtung (4), insbesondere eine Kamera, zur Inspektion von Bereichen einer Oberfläche eines dreidimensionalen Objekts (3), bei dem die Aufnahmeeinrichtung (4) und das Objekt (3) mittels einer Bewegungseinrichtung (5, 6) relativ zueinander bewegbar sind, **dadurch gekennzeichnet, dass** die zu inspizierenden Bereiche anhand eines Verfahrens nach einem der vorstehenden Ansprüche bestimmt werden, und aus den Konstruktionsdaten (8), insbesondere CAD-Daten und sensorisch ermittelten Daten, des Objekts (3) und/oder eines zu inspizierenden Bereichs (12) auf dem Objekt und den optischen Abbildungseigenschaften der Aufnahmeeinrichtung (4), welche in elektronischer Form abgespeichert sind, die Inspektionsbahn (2) für die optische Aufnahmeeinrichtung (4) mittels einer Recheneinheit (10) selbsttätig ermittelt wird, indem eine bestimmte geometrische Relation zwischen der Aufnahmeeinrichtung (4) und der zu inspizierenden Oberfläche vorgegeben wird.

9. Verfahren nach Anspruch 8, **dadurch gekennzeichnet, dass** die optische Aufnahmeeinrichtung (4) über das stehende oder bewegte Objekt (3) geführt wird.

10. Verfahren nach Anspruch 8 oder 9, **dadurch gekennzeichnet, dass** Aufnahmepositionen der Aufnahmeeinrichtung (4) derart bestimmt werden, dass das gesamte dreidimensionale Objekt (3) oder alle zu inspizierenden Bereiche (12) auf dem Objekt durch aufgenommene Bilder abgedeckt werden.

11. Verfahren nach Anspruch 10, **dadurch gekennzeichnet, dass** unter Berücksichtigung von Bewegungsinformationen (11) der Bewegungseinrichtung (5, 6) und den Aufnahmepositionen der Aufnahmeeinrichtung (4) Zeitpunkte für die Aufnahme der Bilder bestimmt werden.

12. Verfahren nach einem der Ansprüche 8 bis 11, **dadurch gekennzeichnet, dass** der Aufnahmeeinrichtung (4) eine Beleuchtungseinrichtung zugeordnet und dass die Inspektionsbahn (2) ermittelt wird, indem eine bestimmte geometrische Relation zwischen der Aufnahmeeinrichtung (4), der Beleuchtungseinrichtung und der zu inspizierenden Oberfläche vorgegeben wird.

13. Verfahren einem der Ansprüche 8 bis 12, **dadurch gekennzeichnet, dass** aus der Inspektionsbahn (2) ein Bewegungsablauf für die Relativbewegung zwischen Objekt (3) und Aufnahmeeinrichtung (4) und/oder Beleuchtungseinrichtung ermittelt wird, wobei bei der Ermittlung des Bewegungsablaufs insbesondere die Inspektionszeit möglichst kurz und/oder der Inspektionsweg möglichst klein gehalten wird.

14. Verfahren nach einem der Ansprüche 8 bis 13, **dadurch gekennzeichnet, dass** jedem Bild der optischen Aufnahmeeinrichtung (4) ein zu inspizierender Bereich (12) innerhalb des Bildes zugeordnet wird, wobei anhand des zu inspizierenden Bereichs (12) und der Inspektionsbahn (2) überprüft wird, ob das durch die Konstruktionsdaten (8) definierte Objekt (3) oder der durch die Konstruktionsdaten (8) definierte gesamte zu inspizierende Bereich (12) auf dem Objekt (3) vollständig abgedeckt wird.

## Claims

1. A method for determining regions (12) of a surface on a three-dimensional object (3), which are to be inspected, from design data (8), particularly CAD data, of the object (3), which data are present in electronic form, it being determined for certain regions (12, 13) on the object (3), whether and in which way these regions (12, 13) should be inspected, by automatically determining regions to be inspected (12), regions (13) not to be inspected and/or regions (12) to be inspected in a certain manner from the design data (8), **characterized in that** the determination of the regions to be inspected takes place by determining geometric shapes or relationships from the design data, and **in that** during the inspection using a recording device (4), these regions (12) to be inspected are assigned to the images actually recorded, wherein features determined from the design data (8) in the regions (12) to be inspected are compared with features that can be recognized in the recorded images.

2. The method according to Claim 1, **characterized in that** the regions (12) to be inspected are saved and/or visualized as computed images (14).

3. The method according to Claim 2, **characterized in that** the automatically generated regions (12) to be inspected can be processed manually.

4. The method according to Claim 2, **characterized in that** the computed images (14) with the regions (12) to be inspected and/or a visualization of the regions (12) to be inspected are inserted into the images which are actually recorded.

5. The method according to one of the preceding claims, **characterized in that** on the basis of the comparison of the features determined in the design data (8) and the features that can be recognized in the recorded images, if there is a deviation, a position correction is carried out by moving the features in the regions to be inspected and in the images over one another.

6. The method according to one of the preceding claims, **characterized in that** the optical recording device (4) is calibrated three-dimensionally.

7. The method according to Claim 6, **characterized in that** fine positioning of the object (3) is carried out in the image.

8. A method for planning an inspection path (2) for at least one optical recording device (4), particularly a camera, for inspecting regions of a surface of a three-dimensional object (3), in which the recording device (4) and the object (3) can be moved relatively to one another by means of a moving device (5, 6), **characterized in that** the regions to be inspected are determined on the basis of a method according to one of the preceding claims, and the inspection path (2) for the optical recording device (4) is determined automatically by means of an arithmetic logic unit (10) from the design data (8), particularly CAD data and data determined by sensors, of the object (3) and/or a region (12) to be inspected on the object and the optical imaging properties of the recording device (4), which are saved in electronic form, by predetermining a certain geometric relationship between the recording device (4) and the surface to be inspected.

9. The method according to Claim 8, **characterized in that** the optical recording device (4) is guided over the standing or moved object (3).

10. The method according to Claim 8 or 9, **characterized in that** recording positions of the recording device (4) are determined in such a manner that the entire three-dimensional object (3) or all of the regions (12) to be inspected on the object are covered by recorded images.

11. The method according to Claim 10, **characterized in that** times for recording the images are determined, taking account of movement information (11) of the moving device (5, 6) and the recording positions of the recording device (4).

12. The method according to one of Claims 8 to 11, **characterized in that** a lighting device is assigned to the recording device (4) and **in that** the inspection path (2) is determined by predetermining a certain geometric relationship between the recording device (4), the lighting device and the surface to be inspected.

13. The method according to one of Claims 8 to 12, **characterized in that** a movement sequence for the relative movement between object (3) and recording device (4) and/or lighting device is determined from the inspection path (2), wherein during the determination of the movement sequence, the inspection time in particular is kept as short as possible and/or the inspection distance is kept as small as possible.

14. The method according to one of Claims 8 to 13, **characterized in that** each image of the optical recording image (4) is assigned a region (12) to be inspected inside the image, wherein a check is carried out on the basis of the region (12) to be inspected and the inspection path (2) as to whether the object (3) defined by the design data (8) or the entire region (12) to be inspected on the object (3), which is defined by the design data (8), is covered completely.

## Revendications

1. Procédé pour déterminer des zones (12) d'une surface à inspecter sur un objet tridimensionnel (3) à partir de données de conception (8) disponibles sous forme électronique, en particulier de données CAO, de l'objet (3), dans lequel pour des zones spécifiques (12, 13) sur l'objet (3) il est spécifié si et comment ces zones (12, 13) doivent être inspectées, en déterminant automatiquement les zones à inspecter (12), zones à ne pas inspecter (13) et/ou zones (12) à inspecter d'une certaine manière à partir des données de conception (8), **caractérisé en ce que** les zones à inspecter sont déterminés par détermination de formes géométriques ou de relations à partir des données de conception et que lors de l'inspection avec un dispositif d'enregistrement (4) une affectation de ces zones à inspecter (12) aux images réellement enregistrées a lieu, dans lequel des caractéristiques déterminées à partir des données de conception (8) dans les zones à inspecter (12) sont comparées avec des caractéristiques reconnaissables dans les images enregistrées.

2. Procédé selon la revendication 1, **caractérisé en ce que** les zones (12) à inspecter sont mémorisées et/ou visualisées sous forme d'images calculées (14).

3. Procédé selon la revendication 2, **caractérisé en ce que** les zones générées automatiquement (12) à inspecter peuvent être traitées manuellement.

4. Procédé selon la revendication 2, **caractérisé en ce que** les images calculées (14) avec les zones (12) à inspecter et/ou une visualisation des zones (12) à inspecter sont superposées aux images réellement enregistrées.

5. Procédé selon une quelconque des revendications précédentes, **caractérisé en ce qu'**en raison de la comparaison des caractéristiques déterminées dans les données de conception (8) et des images reconnaissables enregistrées une correction de position est effectuée en présence d'un écart, en superposant les caractéristiques dans les zones à inspecter et les images.

6. Procédé selon une quelconque des revendications précédentes, **caractérisé en ce que** le dispositif d'enregistrement optique (4) est étalonné tridimensionnellement.

7. Procédé selon la revendication 6, **caractérisé en ce qu'**un positionnement fin de l'objet (3) est effectué dans l'image.

8. Procédé de planification d'une trajectoire d'inspection (2) pour au moins un dispositif d'enregistrement optique (4), en particulier une caméra, pour inspecter des zones d'une surface d'un objet tridimensionnel (3), dans lequel le dispositif d'enregistrement (4) et l'objet (3) sont mobiles l'un par rapport à l'autre au moyen d'un dispositif de déplacement (5, 6), **caractérisé en ce que** les zones à inspecter sont déterminées à l'aide d'un procédé selon une quelconque des revendications précédentes, et qu'à partir des données de conception (8), en particulier les données CAO, et des données déterminées par des capteurs, de l'objet (3) et/ou d'une zone (12) à inspecter sur l'objet et les propriétés d'imagerie optique du dispositif d'enregistrement (4), qui sont mémorisées sous forme électronique, la trajectoire d'inspection (2) pour le dispositif d'enregistrement optique (4) est déterminée automatiquement au moyen d'une unité de calcul (10) en spécifiant une relation géométrique spécifique entre le dispositif d'enregistrement (4) et la surface à inspecter.

9. Procédé selon la revendication 8, **caractérisé en ce que** le dispositif d'enregistrement optique (4) est guidé sur l'objet fixe ou mobile (3).

10. Procédé selon la revendication 8 ou 9, **caractérisé en ce que** les positions d'enregistrement du dispositif d'enregistrement (4) sont déterminées de sorte que tout l'objet tridimensionnel (3) ou toutes les zones (12) à inspecter sur l'objet soient couvertes par des images enregistrées.

11. Procédé selon la revendication 10, **caractérisé en ce que** les instants d'enregistrement des images sont déterminés en tenant compte des informations de mouvement (11) du dispositif de déplacement (5, 6) et des positions d'enregistrement du dispositif d'enregistrement (4).

12. Procédé selon une quelconque des revendications 8 à 11, **caractérisé en ce que** le dispositif d'enregistrement (4) est coordonné à un dispositif d'éclairage et que la trajectoire d'inspection (2) est déterminée en spécifiant une relation géométrique spécifique entre le dispositif d'enregistrement (4), le dispositif d'éclairage et la surface à inspecter.

13. Procédé selon une quelconque des revendications 8 à 12, **caractérisé en ce qu'**à partir de la trajectoire d'inspection (2) une séquence de mouvement permettant le déplacement relatif entre l'objet (3) et le dispositif d'enregistrement (4) et/ou le dispositif d'éclairage est déterminée, dans lequel lors de la détermination de la séquence de mouvement, en particulier, le temps d'inspection est maintenu aussi court que possible et/ou la trajectoire d'inspection est maintenue aussi petite que possible.

14. Procédé selon une quelconque des revendications 8 à 13, **caractérisé en ce qu'**à chaque image du dispositif d'enregistrement optique (4) est affectée une zone (12) à inspecter à l'intérieur de l'image, dans lequel sur la base de la zone (12) à inspecter et de la trajectoire d'inspection (2) il est vérifié si l'objet (3) défini par les données de conception (8) ou toute la zone à inspecter (12) définie par les données de conception (8) est complètement recouvert sur l'objet (3) .
